Europäisches Patentamt

European Patent Office

Office européen des brevets

(19)

(11) Veröffentlichungsnummer: **0 215 389 B1**

(12) **EUROPÄISCHE PATENTSCHRIFT**

(45) Veröffentlichungstag der Patentschrift: 21.08.91

(21) Anmeldenummer: 86112260.4

(22) Anmeldetag: 04.09.86

(51) Int. Cl.5: **B41M 5/24**, B41F 17/26, B23P 21/00, B23K 26/00, B44B 7/00

(54) **Druck- und Beschriftungsverfahren für Bauteile.**

(30) Priorität: 06.09.85 AT 2607/85

(43) Veröffentlichungstag der Anmeldung:
25.03.87 Patentblatt 87/13

(45) Bekanntmachung des Hinweises auf die
Patenterteilung:
21.08.91 Patentblatt 91/34

(84) Benannte Vertragsstaaten:
CH DE FR GB IT LI NL SE

(56) Entgegenhaltungen:
EP-A- 0 085 484          DE-A- 2 756 422
DE-B- 1 081 900          GB-A- 2 153 767
US-A- 4 301 353          US-A- 4 515 867

TECHNISCHE RUNDSCHAU, Band 72, Nr. 30,
29. Juli 1980, Seiten 9-10, Bern, CH; B. ZWAH-
LEN: "Laser-Brand-Marking"

(73) Patentinhaber: **Sticht, Walter**
**Karl-Heinrich-Waggerl-Strasse 8**
**A-4800 Attnang-Puchheim(AT)**

(72) Erfinder: **Sticht, Walter**
**Karl-Heinrich-Waggerl-Strasse 8**
**A-4800 Attnang-Puchheim(AT)**

(74) Vertreter: **Wolke, Heidemarie, Dr.**
**Stadtplatz 7**
**A-4400 Steyr(AT)**

## Beschreibung

Die Erfindung betrifft ein Verfahren zum Bearbeiten von Bauteilen im Zuge einer vollautomatischen Montageanlage, auf der während einer stetigen Vorwärtsbewegung Bauteile aus mehreren Einzelteilen zusammengesetzt bzw. gefügt werden, ein zu bearbeitender Bauteil auf einem Werkstückträger positioniert wird und dieser Werkstückträger von schlupffrei angetriebenen Vorschubrollen über eine Länge einer Bearbeitungsstation vorwärts bewegt wird sowie eine Vorrichtung zur Durchführung dieses Verfahrens.

Es ist bereits ein Verfahren zum Bearbeiten von Bauteilen im Zuge einer vollautomatischen Montageanlage bekannt - gemäß DE-A 27 56 422 - auf welcher während einer ständigen Vorwärtsbewegung Bauteile aus mehreren Einzelteilen zusammengesetzt bzw. gefügt werden. Ein zu bearbeitender Bauteil wird auf einem Werkstückträger positioniert und dieser Werkstückträger wird von schlupffrei angetriebenen Vorschubrollen über eine Länge einer Bearbeitungsstation vorwärtsbewegt. Dadurch wird eine ausreichend exakte Positionierung und ein ausreichend exakter Vorschub für die Werkstückträger während einer automatischen Montage erzielt. Die Führungsgenauigkeit der Werkstückträger während des Vorschubs von einer Bearbeitungsposition zur anderen war jedoch nicht für alle Einsatzfälle ausreichend.

Weiters sind unterschiedlichste Druckverfahren, wie der Siebdruck, der Stempeldruck und das Offsetdruckverfahren bekannt. In Verbindung mit vollautomatischen Montageanlagen, in welchen bedruckte Teile zu verarbeiten sind, wurde meist derart vorgegangen, daß diese Teile vor ihrer Montage mit eigenen Maschinen bedruckt und dann auf Montagemaschinen verarbeitet werden. Bei hohen Stückzahlen werden dabei meist eigene Maschinen eingesetzt, bei welchen die zu bedruckenden Teile mittels Werkstückträger an der Druckvorrichtung vorbeibewegt werden. Die Teile werden im indirekten Tiefdruck mit Siebdruckfarben bedruckt, indem der Werkstückträger mit dem zu bedruckenden Teil angehalten und der Druck aufgebracht wurde. Es handelte sich daher um ein schrittweises Vorwärtsbewegen der Werkstückträger. Um einen exakten Druck zu erreichen, mußte dabei versucht werden, daß im Zeitpunkt des Aufdruckens die übrigen Werkstückträger stillgesetzt bzw. zumindest Schwingungsbeeinflussungen der Druckstation durch andere Stationen vermieden werden. Der höhere Aufwand und das Risiko einer Beschädigung des Druckes durch den Betrieb einer eigenen Transportanlage für die Druckstation sowie die zusätzliche Manipulation der Teile zwischen der Druckmaschine und einer vollautomatischen Montageanlage führte dann meist dazu, daß versucht wurde, mit unbedruckten Teilen das Auslangen zu finden. Vor allem dann, wenn ein Druckbild sich über mehrere im Zuge des Montagevorganges zusammengesetzte Bauteile erstrecken soll, ergeben sich damit gestalterische Schwierigkeiten, vor allem auch dann, wenn eine Beschriftung dieser Teile nur im zusammengebauten Zustand möglich ist. Diese Probleme konnten mit dem bekannten Verfahren und Vorrichtungen nicht zufriedenstellend gelöst werden.

Desweiteren ist es bereits bekannt, zum Beschriften von Kunststoffteilen Laserstrahlen bzw. Laservorrichtungen einzusetzen. Es wird hierbei meist so vorgegangen, daß die Beschriftung in die Oberfläche des Kunststoffteiles eingebrannt wird.

Der vorliegenden Erfindung liegt nunmehr die Aufgabe zugrunde, ein Verfahren und eine Vorrichtung zum Bedrucken und Beschriften von Montageteilen zu schaffen, welche einen hochwertigen Druck bei hoher Druckgeschwindigkeit ermöglicht. Insbesondere soll die Vorrichtung auch zur Herstellung von Druckbildern einsetzbar sein, welche sich über, aus mehreren Einzelteilen zusammengesetzte Bauteilflächen erstrecken. Darüberhinaus soll es möglich sein, auch eine produktionsabhängige Beschriftung der Einzelteile zu ermöglichen.

Diese Aufgabe der Erfindung wird dadurch gelöst, daß die Vorschubrollen synchron mit der Druckwalze angetrieben werden und die Länge um die der Werkstückträger vorwärtsbewegt wird einer Länge eines aufzubringenden Druckes entspricht und danach mittels Laserstrahlen zumindest eine Farbschichte durch Hitzeeinwirkung entsprechend einem gewünschten Beschriftungsbild entfernt wird. Durch diese überraschend einfache Erkenntnis ist es nunmehr möglich, in einem Durchlaufverfahren, also kontinuierlich mit einem Offsetdruckverfahren, die unterschiedlichen Drucke auf verschiedene Bauteile aufzubringen. Da der Werkstückträger schlupffrei und synchron mit der Druckwalze angetrieben wird, ist das Aufbringen einwandfreier Drukke auf, im Zuge der Montage aus mehreren Einzelteilen zusammengebauten Bauteilen möglich. Damit ist ein kontinuierlicher Durchlauf der zu bedruckenden Bauteile durch die Druckstation möglich und es wird durch die Führung und den Antrieb der Werkstückträger synchron mit der Druckwalze erreicht, daß sich von außen auf die Druckstation einwirkende Schwingungen beim Druckvorgang nicht nachteilig auswirken können. Darüberhinaus kann bei Verwendung von Laserstrahlen eine exakte Beschriftung eingehalten werden, da die Dicke der Lackschicht und deren Konsistenz auf den Abtrag mittels der Laserstrahlen vorbereitet werden kann und somit von unterschiedlichen Materialien des Bauteiles völlig unabhängig ist.

Gemäß einem weiteren Merkmal der Erfindung ist vorgesehen, daß die zu bedruckende Fläche und die den Vorschubrollen zugewendete Reibfläche am Werkstückträger in einer Ebene angeordnet werden, wodurch aufgrund der gleichen Umdrehungsgeschwindigkeiten der Antriebsorgane Verzerrungen im Druckbild verhindert werden.

Weiters ist es auch möglich, daß die Transportgeschwindigkeit des Werkstückträgers bzw. des Bauteiles außerhalb des Bereiches der Vorschubrollen kleiner ist als in jenem Bereich, in welchem die Vorschubrollen sich am Werkstückträger abwälzen, wodurch sich die Wirkung von parallel zu den Vorschubrollen angeordneten Vorschubantrieben während des Druckvorganges nicht nachteilig auf diesen ausüben kann, da der Werkstückträger bzw. der zu bedruckende Bauteil dieser weiteren Vorschubrichtung voreilt.

Nach einer anderen Ausführungsvariante ist vorgesehen, daß nach einem Aufbringen einer Farbschichte auf einem Bauteil die Drehrichtung der Vorschubrollen und Druckwalze umgekehrt und der Werkstückträger mit dem Bauteil in entgegengesetzter Richtung nochmals unter der Druckwalze hindurchbewegt und eine Farbschichte aufgebracht wird, worauf am Ende nach dem Aufbringen der weiteren Farbschichte die Drehrichtung der Vorschubrolle und der Druckwalze wieder in die ursprüngliche Drehrichtung entsprechend der Vorwärtsbewegung beim Aufbringen der ersten Farbschichte verbracht wird und der Werkstückträger mit dem Bauteil unter der Druckwalze zum Aufbringen einer nächsten Farbschichte hindurchbewegt wird, wonach der Bauteil getrocknet wird. Durch einen derartigen Verfahrensablauf wird erreicht, daß auch bei Oberflächen die die im Zuge des Druckvorganges aufzubringende Farbe nur schwer annehmen, wie beispielsweise mit Trennmittelresten versehene Kunststoffteile und dgl., eine einwandfreie Farbbeschichtung möglich ist, wobei jedoch trotzdem mit einer einzigen Druckwalze das Auslangen gefunden werden kann.

Weiters ist es auch möglich, daß der getrocknete Bauteil durch eine weitere synchron mit einer weiteren Druckwalze angetriebene Vorschubrolle zumindest einmal über die Länge des aufzubringenden Druckes entlangbewegt wird, wobei mit der weiteren Druckwalze zumindest eine weitere Farbschichte mit unterschiedlicher Farbe aufgebracht wird, wonach der Bauteil getrocknet wird. Durch die Trocknung der Einzelteile nach jedem Druckvorgang ist es möglich, in kurzen Abständen hintereinander mehrere Farbschichten übereinander aufzubringen.

Von Vorteil ist es weiters, wenn zwischen dem Aufbringen zweier Farbschichten die Druckwalze zumindest zwei volle Umdrehungen in Anlage an der Einfärbwalze vornimmt und daran anschließend die weitere Farbschichte aufgebracht wird, wobei vorzugsweise zum Einfärben der Druckwalze diese aus ihrer dem Bauteil zugewandten Druckstellung in eine Einfärbestellung verstellt wird, da dadurch sichergestellt wird, daß auf der Druckwalze eine Farbschichte mit ausreichender Dicke vorhanden ist, um bei den reversierenden Durchläufen der zu bedruckenden Oberfläche jeweils ein exaktes Aufbringen der Farbschichte zu ermöglichen, ohne daß die zuvor aufgebrachte Farbschichte zerstört oder abgelöst wird.

Von besonderem Vorteil ist weiters eine Ausführungsvariante des Verfahrens, nach dem die Frequenz der aufeinanderfolgenden Laserstrahlblitze und bzw. oder ein Achsabstand zweier nebeneinanderliegender Arbeitspunkte des Laserstrahles zur Herstellung des Beschriftungsbildes kleiner als ein Durchmesser und größer als eine Hälfte des Durchmessers des Laserstrahles ist, da damit eine in etwa gleiche Einbrenntiefe eingehalten werden kann und die darunterliegende Farbschichte bzw. die Bauteiloberfläche nicht nachteilig verändert wird.

Es ist aber auch möglich, daß mit einer großen Masse ein eigenes Schwingsystem gebildet wird und eine Lenkvorrichtung für die Laserstrahlen sowie der zu beschriftende Bauteil mit diesem Schwingsystem bewegungsverbunden werden, da dadurch bei hoher Geschwindigkeit exakte und fehlerfreie Beschriftungen der bedruckten Flächen mit Laserstrahlen möglich sind.

Die Erfindung umfaßt weiters auch eine Vorrichtung zum Bearbeiten von Bauteilen im Zuge einer vollautomatischen Montageanlage mit entlang einer Führungsbahn geführten Werkstückträgern, auf welchen Einzelteile der herzustellenden Bauteile in einer vorbestimmten Position gehalten sind und mit einer Fördervorrichtung zum Verfahren der Werkstückträger entlang der Führungsbahn sowie mit einer Bearbeitungsstation zum Bearbeiten der auf den Werkstückträgern angeordneten Bauteile, die mit einer zu bearbeitenden Fläche und einer Reibfläche für Vorschubrollen versehen sind zur Durchführung des Verfahrens.

Diese Vorrichtung ist dadurch gekennzeichnet, daß eine Druckvorrichtung zum Bedrucken der auf den Werkstückträgern angeordneten Bauteile angeordnet ist mit der die zu bearbeitende Fläche zu bedrucken ist, welche gemeinsam mit einer Reibfläche für Vorschubrollen in einer parallel zur Förderrichtung sich erstreckenden Ebene angeordnet ist, und daß in einer einem Abstand zwischen dieser Ebene und der Förderbahn für den Werkstückträger entsprechenden Distanz von dieser Förderbahn in einer senkrecht zur Förderrichtung verlaufenden Ebene eine Druckwalze angeordnet ist, die über ein Verbindungsglied synchron mit den Vorschubrollen angetrieben ist und daß die Druckwalze und die Vorschubrollen mit einem eine in Richtung des Werkstückträgers gerichtete Kraft ausübenden Anpreßantrieb wirkverbunden sind. Die Anordnung ermöglicht in überraschend einfacher Weise einen schlupffreien und schwingungsfreien Vorschub der Werkstückträger bzw. der auf diesen angeordneten Bauteile, da der Werkstückträger über den den Vorschubrollen zugeordneten Anpreßantrieb und der Bauteil über den der Druckwalze zugeordneten Anpreßantrieb in einer vorbestimmten Einspannung geführt ist.

Nach einer weiteren Ausführungsvariante ist vorgesehen, daß die Druckwalze und Vorschubrolle über einen gemeinsamen Antriebsmotor angetrieben sind und daß eine Tippwalze und die zwischen dieser und einem Farbbehälter angeordneten Antriebsteile, wie z.B. die Duktorwalze, mit einem weiteren davon unabhängigen Antriebsmotor gekuppelt sind, wodurch es in einfacher Weise möglich ist, die Vorschubrolle und die Druckwalze in entgegengesetzten Drehrichtungen zu betreiben und trotzdem eine einwandfreie Einfärbung der Druckwalze sicherzustellen.

Weiters ist es aber auch möglich, daß dem Werkstückträger eine von den Vorschubrollen unabhängige Fördervorrichtung mit umschaltbarer Förderrichtung zugeordnet ist, deren Förderbereich sich zumindest zwischen einer der Druckwalze vorgeordneten Warteposition bis in den Bereich einer der Druckwalze in Förderrichtung nachgeordneten Trockenvorrichtung erstreckt, wodurch ein nahtloser Zu- und Abtransport der die zu bedruckenden Bauteile aufnehmenden Werkstückträger möglich ist.

Nach einer anderen Ausführungsvariante ist vorgesehen, daß die Vorschubrolle und die Druckwalze auf einem, um eine quer zur Förderrichtung ausgerichtete Achse gelagerten Schwenkarm angeordnet ist und der Antriebsmotor ebenfalls um eine parallel zu dieser Achse ausgerichtete Schwenkachse verstellbar ist und mit einem Antriebsorgan der Druckwalze und Vorschubrollen über ein Übertragungsglied, z.B. eine Kette oder einen Zahnriemen, antriebsverbunden ist. Das Eigengewicht der Druckvorrichtung bildet damit einen Anteil der Anpreßkraft und es können damit auch einfach Veränderungen im Durchmesser der Druckwalze bzw. der Vorschubrollen ausgeglichen werden.

Vorteilhaft ist es aber auch, daß der die Vorschubrollen und die Druckwalze lagernde Schwenkarm auch die zwischen der Druckwalze und der Tippwalze angeordneten Antriebsteile der Druckvorrichtung lagert, wodurch mit einem einheitlichen Antriebssystem zwischen der Tippwalze und der Druckwalze das Auslangen gefunden werden kann.

Zum besseren Verständnis der Erfindung wird diese im folgenden anhand der in den Zeichnungen dargestellten Ausführungsbeispielen näher erläutert.

Es zeigen:

Fig. 1 eine Draufsicht auf eine vollautomatische Montageanlage für Bauteile zur Durchführung des erfindungsgemäßen Verfahrens in vereinfachter schematischer Darstellung und Draufsicht;

Fig. 2 jenen Bereich der Montageanlage, in welchem die erfindungsgemäße Vorrichtung angeordnet ist, in vereinfachter schematischer Darstellung und Draufsicht;

Fig. 3 einen Teil der Montageanlage im Bereich der erfindungsgemäßen Vorrichtung gemäß Fig.2 in Seitenansicht, teilweise geschnitten;

Fig. 4 einen Teil der Montageanlage im Bereich der Beschriftungsvorrichtung in vereinfachter schematischer Darstellung und Stirnansicht;

Fig. 5 einen Teil des Bauteiles 9 mit einem aufgebrachten Beschriftungssymbol in schaubildlicher und stark vereinfachter und vergrößerter Darstellung;

Fig. 6 einen Ausschnitt aus dem Beschriftungsbild in Stirnansicht gemäß Fig.5 im stark vergrößertem Maßstab.

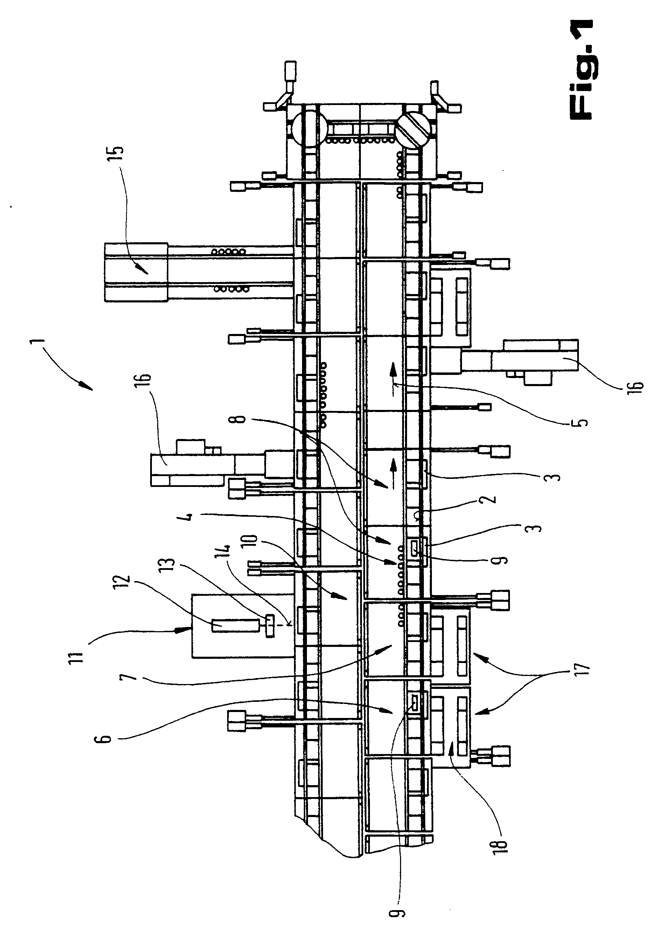

In Fig.1 ist eine Montageanlage 1 gezeigt, bei der entlang einer Führungsbahn 2 Werkstückträger 3 mit einer, durch an den Seitenflanken der Werkstückträger 3 zur Anlage kommenden Rollen gebildeten Fördervorrichtung 4 verfahrbar sind. Mittels dieser Fördervorrichtung 4 werden die Werkstückträger 3 in Förderrichtung - Pfeil 5 - von einer Arbeitsstation 6 zu nachfolgenden Arbeitsstationen 7,8 befördert. Auf den Werkstückträgern 3 sind Bauteile 9 angeordnet, die bei der Vorwärtsbewegung von einer Arbeitsstation 6,7 bzw. 8 zu einer anderen Arbeitsstation 7 bzw. 8 zusammengebaut bzw. bearbeitet werden. Im Bereich einer Arbeitsstation 10 ist eine Beschriftungsvorrichtung 11 angeordnet, die einen Laser 12 sowie eine Lenkvorrichtung 13 für einen Laserstrahl 14 umfaßt.

Mit 15 und 16 sind Palettiervorrichtungen und Zuführvorrichtungen bezeichnet, mit welchen Einzelteile, aus welchen der Bauteil 9 zusammengesetzt ist, in den Bereich der Arbeitsstationen ausgerichtet und vereinzelt zur Entnahme bereitgestellt werden. Die Ausbildung der einzelnen Arbeitsstationen 6 bis 8 und 10 können dabei entsprechend den Ausführungen in der DE-OS 27 56 422 des gleichen Anmelders ausgebildet sein. Gleichermaßen können auch die Fördervorrichtung 4 sowie die Werkstückträger 3 entsprechend den Darlegungen in der DE-OS 33 04 091, der DE-OS 34 09 843, der DE-OS 34 11 452 und der DE-OS 35 02 820 des gleichen Anmelders ausgebildet sein.

Im Bereich der Arbeitsstationen 6 und 7 der Montageanlage 1 ist seitlich der Führungsbahn 2 jeweils eine Druckvorrichtung 17 vorgesehen. Die Druckvorrichtung 17 umfaßt eine Förderbahn 18.

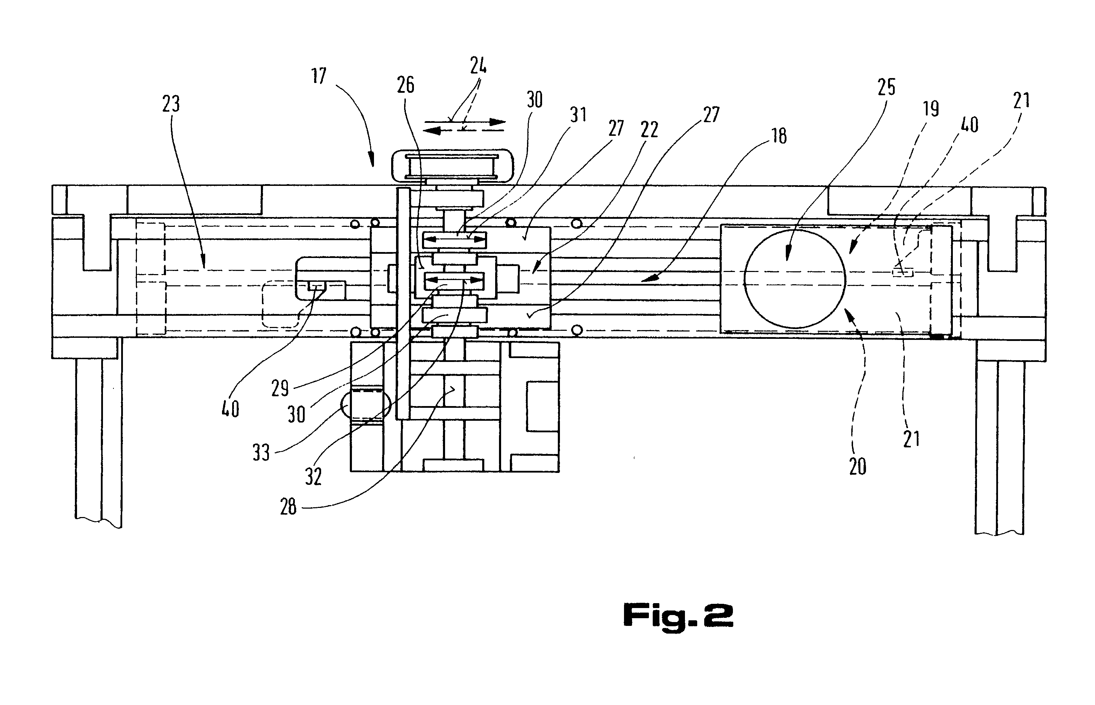

In Fig. 2 ist diese Förderbahn 18 der Druckvorrichtung 17 im größerem Maßstab dargestellt. Auf der Förderbahn 18 sind mittels einer Fördervorrichtung 19 bzw. 20, die beispielsweise durch Zylinderkolbenantriebe 21 gebildet sein können, Werkstückträger 22 entlang der Förderbahn 18 verfahrbar angeordnet. Die Werkstückträger 22 werden dabei von einer Warteposition 23 entsprechend der Förderrichtung - Pfeil 24 - an der Druckvorrichtung 17 vorbei in den Bereich einer Trockenvorrichtung 25 verbracht.

In der Druckvorrichtung 17 ist in einer zur zu bedruckenden Fläche 26 und zu am Werkstückträger 22 angeordneten Reibflächen 27 parallelen Ebene eine Antriebswelle 28 gelagert, die eine Druckwalze 29 und Vorschubrollen 30 lagert. Die Druckwalze 29 ist dabei der zu bedruckenden Fläche 26 und die Vorschubrollen 30 sind den Reibflächen 27 am Werkstückträger 22 zugeordnet. Befinden sich die Reibflächen 27 und die zu bedruckende Fläche 26 in derselben parallel zur Antriebswelle 28 verlaufenden Ebene, so weisen die Vorschubrollen 30 einen geringfügig größeren Durchmesser 31 auf als ein Durchmesser 32 der Druckwalze 29. Die Vorschubrollen 30 bestehen aus einem elastischen Werkstoff, z.B. einem Polyurethan, und werden über einen Anpreßantrieb 33 mit einer entsprechend großen Kraft gegen die Reibflächen 27 gedrückt, sodaß sie sich um jenes Ausmaß verformen, welches im wesentlichen der Hälfte der Differenz zwischen den Durchmessern 31 und 32 entspricht. Dadurch wird ein ausreichender Reibschluß zwischen den Vorschubrollen 30 und dem Werkstückträger 22 sowie der Druckwalze 29 und der zu bedruckenden Fläche 26 erreicht. Der Ordnung halber sei darauf hingewiesen, daß diese Verformung zum besseren Verständnis stark übertrieben dargestellt ist.

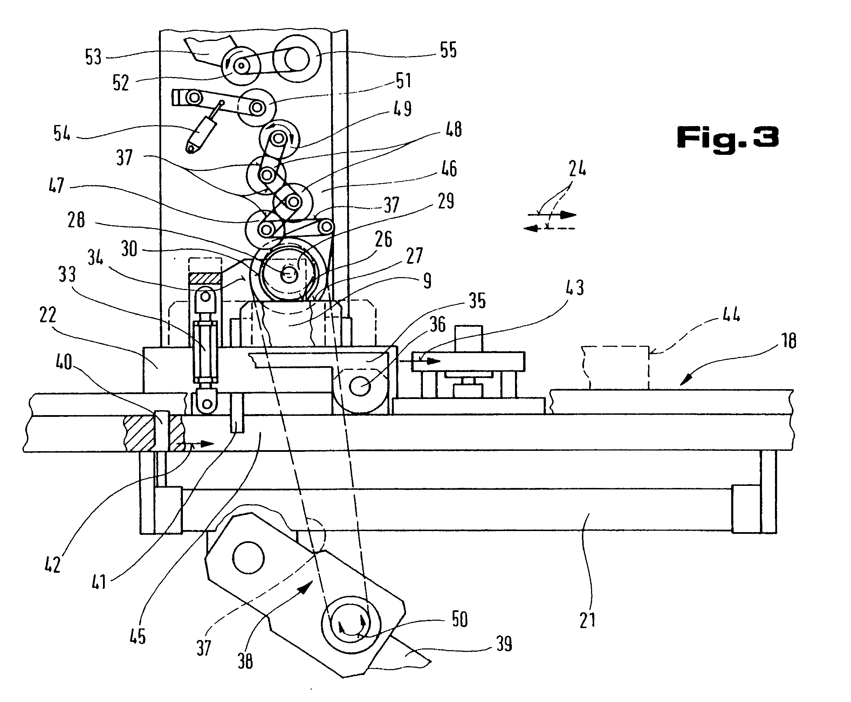

In Fig.3 ist die Anordnung der Antriebswelle 28 und der Vorschubrollen 30 bzw. der Druckwalze 29 in Relation zum Bauteil 9 bzw. der zu bedruckenden Fläche 26 besser ersichtlich. Die Antriebswelle 28 ist in einem Gehäuse 34 gelagert, welches einen Schwenkarm 35 aufweist, der auf einer Achse 36 gelagert ist, die parallel zur Antriebswelle 28 verläuft. Über den Anpreßantrieb 33 können über die Antriebswelle 28 die Vorschubrollen 30 und die Druckwalze 29 zur Auflage auf die zu bedruckende Fläche 26 bzw. die Reibflächen 27 gebracht werden. Der Antrieb der antriebswelle 28 erfolgt über ein, im vorliegenden Fall durch einen Zahnriemen 37 gebildetes Übertragungsglied, welches ein Antriebsorgan 38 auf der Antriebswelle 28 mit einem Antriebsmotor 39 verbindet.

Weiters sind Zylinderkolbenantriebe 21 ersichtlich, von welchen ein Mitnehmer 40 einem Anschlag 41 der Werkstückträger 22 vor- und der andere Mitnehmer 40 nachgeordnet ist, wodurch der Werkstückträger 22 durch abwechselndes Beaufschlagen der Fördervorrichtungen 19,20 in entgegengesetzten Richtungen unter der Druckwalze 29 hindurchbewegt werden kann. Wie aus der Darstellung in Fig.3 ersichtlich, sind der Anschlag 41 und der Mitnehmer 40 in Förderrichtung - Pfeil 24 - voneinander distanziert. Dies deshalb, da die Vorschubgeschwindigkeit - symbolisch durch einen Pfeil 42 angedeutet - kleiner ist als die durch die Vorschubrollen 30 auf den Werkstückträger 22 ausgeübte, durch den Pfeil 43 schematisch angedeutete, Vorwärtsbewegung. Dadurch wird sichergestellt, daß der Werkstückträger 22 beim Durchlauf unter der Druckwalze 29 exakt synchron zur Bewegung der Druckwalze 29 angetrieben wird und dementsprechend ein exakter Druck auf die Fläche 26 aufgebracht werden kann. Hat der Werkstückträger 22 die Druckwalze 29 passiert und befindet er sich beispielsweise in der durch strichlierte Linien angedeuteten Stellung 44, so wird er dann durch den Mitnehmer 40 bis in den Endbereich der Förderbahn 18 mitgenommen. Selbstverständlich ist es auch möglich, daß die Vorschubrollen 30, wie mit strichpunktierten Linien angedeutet, nur über einen Teilbereich der Länge des Werkstückträgers 22 zum Eingriff kommen, der im wesentlichen der Länge der zu bedruckenden Fläche 26 in Förderrichtung 24 entspricht. Dadurch kann die Druckwalze 29 mit den auf derselben Antriebswelle 28 angeordneten Vorschubrollen 30 früher abgehoben und zum Nachfärben mit der Farbwalze in Kontakt gebracht werden.

Unabhängig von Schwenkarm 35 ist am Maschinentisch 45 der Förderbahn 18 ein Traggerstell 46 befestigt. In diesem Traggestell ist die Druckwalze 29, eine Klischeewalze 47, zwei Einfärbwalzen 48 und eine Verreibwalze 49 gelagert. Sowohl die Klischeewalze 47 als auch die Einfärbwalze 48 und die Verreibwalze 49 sind vom Antriebsmotor 39 über Übertragungsglieder, z.B. Zahnriemen 37, zentral angetrieben. Nachdem der Antriebsmotor 39 zum Bedrucken der Bauteile 9 durch die Pfeile 24 symbolisch angedeuteten gegengleichen Bewegungsrichtungen ebenfalls in entgegengesetzten Richtungen - wie schematisch durch den Pfeil 50 angedeutet - antreibbar ist, drehen sich auch diese Walzen in jeweils gleichem Drehsinn wie die Druckwalze 29. Dazu kommt, daß die Verreibwalze 49, wie bei derartigen Druckwerken üblich, zuzüglich zu der Rotationsbewegung auch eine in Achsrichtung verlaufende alternierende Verschiebebewegung durchführt, um die über die nicht angetriebene Tippwalze 51 von der Duktorwalze 52 übernommene Farbe gleichmäßig auf die Einfärbwalzen 48 zu übertragen. Die Duktorwalze 52 ist unmittelbar einem Farbbehälter 53 nachgeordnet. Die Tippwalze 51 wird über einen Antrieb 54 wechselweise zur Anlage an der Duktorwalze 52 bzw. der Verreibwalze 49 gebracht. Da nun, wie vorstehend bereits erläutert, die zwischen der Verreibwalze 49 und der Druckwalze 29 liegenden Walzen ja nach Fortbewegungsrichtung des Bauteiles 9 wechselnde Drehrichtungen einnehmen, ist der Duktorwalze 52, die zur exakten Farbentnahme jeweils nur eine Drehrichtung aufweisen darf, ein eigener Antriebsmotor 55 zugeordnet. Damit ist es möglich, einen reversierenden Druckbetrieb mit der Druckwalze 29 auszuüben, ohne daß die Gefahr besteht, daß die im vorhergehenden Druckvorgang auf den Bauteil 9 aufgebrachte Farbe beim darauffolgenden gegenläufigen Druckvorgang wieder abgelöst wird.

Durch die Relativbewegung zwischen der Druckwalze 29 und der Klischeewalze 47 ist es auch möglich, daß die Druckwalze 29 in ihrer an dem Bauteil 9 anliegenden Druckposition auch eine eine Volldrehung überschreitende Rotation durchführen kann, ohne daß das Druckbild gestört wird, da während des Farbauftrages auf den Bauteil 9 keine Anlage der Druckwalze 29 an der Klischeewalze 47 gegeben ist. Selbstverständlich ist es aber auch möglich, jede beliebig gestaltete Druckvorrichtung zu verwenden und beispielsweise alle Walzen mit einem zentralen Antrieb anzutreiben, wobei dann beispielsweise die Antriebsverbindung für die Duktorwalze bei entgegengesetzter Drehrichtung des Antriebsmotors unterbrochen wird. Auch ist es möglich, die Druckwalze ständig an der Klischeewalze 47 anliegen zu lassen und die Trennung zwischen der Tippwalze 51 und der Verreibwalze 49 vorzunehmen.

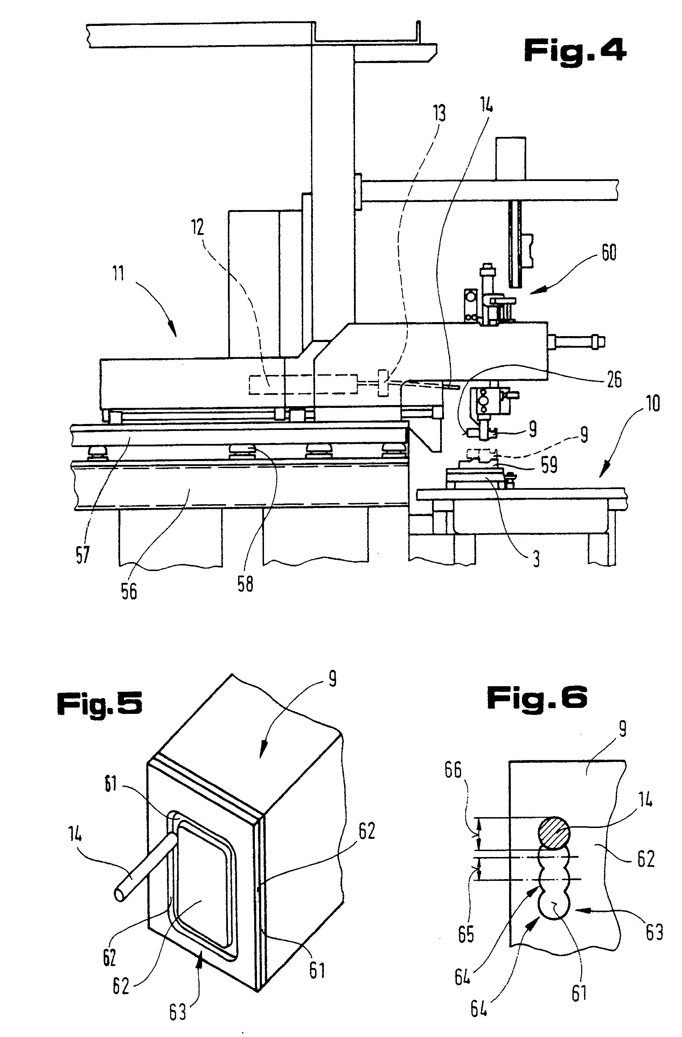

In Fig.4 ist die Beschriftungsvorrichtung 11 im Bereich der Arbeitsstation 10 dargestellt. Die Beschriftungsvorrichtung 11 ist auf einem massiven Traggestell 56 befestigt, wobei das Gehäuse für den Laser 12 mit den diesen zugeordneten Kühlvorrichtungen auf einer einen Massekörper 57 bildenden Tragplatte über Schwingungsdämpfungselemente 58 abgestützt ist. Weiters ist dem Laser 12 eine Lenkvorrichtung 13 zugeordnet, mit der ein Laserstrahl 14 zum Beschriften der mit Farbe bedruckten Fläche 26 des Bauteiles 9 abgelenkt wird. Selbstverständlich sind der Laser 12, die Lenkvorrichtung 13 und der Laserstrahl 14 nur rein schematisch dargestellt, da derartige Einrichtungen bereits seit einiger Zeit zum Stand der Technik zählen. Bei der Beschriftung wird dabei so vorgegangen, daß der Bauteil 9 aus seiner Halterung 59 am Werkstückträger 3 der Montageanlage 1 mit einer Handhabungsvorrichtung 60 abgehoben und in eine fixe Lage relativ zum Laser 12 bzw. der Lenkvorrichtung 13 verbracht wird. Die Beschriftung des Bauteiles 9 geht nun derart vor sich, daß von den beiden am Bauteil 9 aufgebrachten Farbschichten 61 und 62 mit dem Laserstrahl 14 die Farbschichte 62, wie in Fig.5 schematisch angedeutet, herausgebrannt wird, um ein Beschriftungssymbol 63 durch die unterschiedliche Farbe der darunterliegenden Farbschichte 61 gegenüber der Farbschichte 62 zu erzeugen. Dabei kann derart vorgegangen werden, daß die Farbschichte 62 eine helle Farbe und die Farbschichte 61 beispielsweise eine dunkle Farbe oder umgekehrt aufweist. Selbstverständlich ist die Dicke der Farbschichten 61,62 zum Verständnis der erfindungsgemäßen Wirkungsweise in Fig.5 stark übertrieben dargestellt und beträgt üblicherweise nur Bruchteile eines Millimeters.

In Fig.6 ist ein Teil des Beschriftungssymboles 63 im stark vergrößertem Maßstab dargestellt. Wie ersichtlich, setzt sich die Form des Beschriftungssymboles 63 aus einer Vielzahl von Arbeitspunkten 64 des Laserstrahles 14 zusammen, wobei sich diese Arbeitspunkte 64 nur zum Teil überdecken. Dementsprechend ist ein Achsabstand 65 zwischen zwei derartigen Arbeitspunkten 64 kleiner als ein Durchmesser 66 des Laserstrahles 14 bzw. größer als etwa die Hälfte des Durchmessers 66. Dadurch wird verhindert, daß durch eine zu hohe Energieeinwirkung nicht nur die Farbschichte 62, sondern auch die Farbschichte 61 durchgebrannt und kein einheitliches Beschriftungsbild hergestellt wird. Dabei ist zu beachten, daß selbstverständlich auch bei ineinander verschlungenen Beschriftungssymbolen, bei welchen sich die einzelnen Beschriftungslinien bzw. Wege kreuzen, im Bereich der Kreuzungsstellen der Laserstrahl 14 ebenfalls nur einmal an jedem Arbeitspunkt zum Einsatz gelangt, sodaß auch in diesen Kreuzungsstellen ein Durchbrennen der weiteren Farbschichte verhindert wird.

Für die Steuerung des Laserstrahles 14 zur Herstellung des Beschriftungssymbols 63 wird der Laserstrahl 14 mit zwei galvanometerbetätigten Spiegeln umgelenkt und in einer vorbestimmten Frequenz aktiviert. Die Frequenz der Laserstrahlblitze ist dabei in Abhängigkeit von den durch die galvanometerbetätigten Spielgeln ausgeübten Vorschubgeschwindigkeit entlang des Beschriftungssymboles derart zu wählen, daß der gewünschte Abstand der Arbeitspunkte eingehalten wird.

Die von außen auf den Laser 12 bzw. die Lenkvorrichtung 13 einwirkenden Schwingungen können das Beschriftungsbild bzw. das Beschriftungssymbol 63 nicht nachteilig verändern, da die Handhabungsvorrichtung 60 am gleichen Massekörper 57 wie der Laser 12 befestigt ist. Dadurch, daß die Handhabungsvorrichtung 60 und der Laser 12 ein geschlossenes Schwingungssystem bilden, ist auch beim Einsatz im Zuge von vollautomatischen Montageanlagen eine exakte Beschriftungsgüte gewährleistet.

Der Ablauf des erfindungsgemäßen Verfahrens ist nun derart, daß die in den vor den Arbeitsstationen 6 und 7 liegenden Arbeitsstationen vormontierten Bauteile 9 von den Werkstückträgern 3 im Bereich der Arbeitsstation 6 von diesen abgehoben und auf Werkstückträger 22 der Förderbahn 18 abgesetzt werden. Daran anschließend werden die Bauteile 9 mit den zu bedruckenden Flächen 26 unter der Druckwalze 29 hindurchbewegt, wobei dazu der Werkstückträger 22 mit den Fördervorrichtungen 19,20 bis in jenen Bereich verbracht wird, in welchem die Vorschubrollen 30 auf den Reibflächen 27 der Werkstückträger 22 zur Anlage kommen. Daraufhin werden sie durch die Vorschubrollen 30 mit einer gegenüber der Geschwindigkeit der Fördervorrichtungen 19,20 - schematisch durch die Größe eines Pfeiles 42 angedeutet - höheren Geschwindigkeit - schematisch durch die Größe eines Pfeiles 43 angedeutet - vorwärtsbewegt. Dabei wird gleichzeitig von der Druckwalze 29 die Farbe bzw. der gewünschte Druck auf die Fläche 26 aufgebracht. Hat die zu bedruckende Fläche 26 die Druckwalze 29 passiert, so wird der Werkstückträger von dem nacheilenden Mitnehmer 40 der Fördervorrichtung 19 weiterbewegt, während oder worauf die Druckwalze 29 von der zu bedruckenden Fläche 26 abgehoben und zur Anlage an der Klischeewalze 47 bzw. der Tippwalze 51 gebracht, um neu mit Farbe beschichtet zu werden. Währenddessen wird der Vorschub mit der Fördervorrichtung 19 unterbrochen und die in entgegengesetzter Förderrichtung wirkende Fördervorrichtung 20 beaufschlagt und der Werkstückträger 22 mit dem Bauteil 9 wieder in den Bereich der Druckwalze 29 verbracht, worauf durch die mit der Druckwalze 29 gekoppelten Vorschubrollen 30 der Werkstückträger 22 mit der zu bedruckenden Fläche 26 erneut unter der Druckwalze 29 hindurchbewegt wird. Dieser Vorgang wird danach, wie bereits vorher beschrieben, wieder umgekehrt und der Werkstückträger 22 nochmals unter der Druckwalze 29 durchbewegt. Je nach dem, in welcher Stärke ein Farbauftrag erfolgen soll, kann nunmehr unmittelbar der Werkstückträger 22 mit dem Bauteil 9 der Trockenvorrichtung 25 zugeführt werden oder der Werkstückträger wird noch zwei- oder mehrmals durch die Druckvorrichtung 17 hindurchbewegt.

Der derart mit einer Farbschichte 61 versehene Bauteil 9 wird dann auf die Werkstückträger 22 der der Arbeitsstation 7 zugeordneten Förderbahn 18 weitergegeben und es wird dort in gleicher Weise die zweite Farbschichte 62 aufgebracht.

Daran anschließend wird der Bauteil 9 auf die Werkstückträger 3 der Montageanlage 1 aufgesetzt und in den Bereich der Arbeitsstation 10 und der Beschriftungsvorrichtung 11 verbracht.

Dort wird der Bauteil 9 entsprechend der in Fig.4 und 5 beschriebenen Vorgangsweise beschriftet.

**Bezugzeichenaufstellung**

| 1 | Montageanlage |
|---|---|
| 2 | Führungsbahn |
| 3 | Werkstückträger |
| 4 | Fördervorrichtung |
| 5 | Pfeil |
| 6 | Arbeitsstation |
| 7 | Arbeitsstation |
| 8 | Arbeitsstation |
| 9 | Bauteil |
| 10 | Arbeitsstation |
| 11 | Beschriftungsvorrichtung |
| 12 | Laser |
| 13 | Lenkvorrichtung |
| 14 | Laserstrahl |
| 15 | Palettiervorrichtung |
| 16 | Zuführvorrichtung |
| 17 | Druckvorrichtung |
| 18 | Förderbahn |
| 19 | Fördervorrichtung |
| 20 | Fördervorrichtung |
| 21 | Zylinderkolbenantrieb |
| 22 | Werkstückträger |
| 23 | Warteposition |
| 24 | Pfeil |
| 25 | Trockenvorrichtung |
| 26 | Fläche |
| 27 | Reibfläche |
| 28 | Antriebswelle |
| 29 | Druckwalze |
| 30 | Vorschubrolle |
| 31 | Durchmesser |
| 32 | Durchmesser |
| 33 | Anpreßantrieb |
| 34 | Gehäuse |
| 35 | Schwenkarm |
| 36 | Achse |
| 37 | Zahnriemen |
| 38 | Antriebsorgan |
| 39 | Antriebsmotor |
| 40 | Mitnehmer |
| 41 | Anschlag |
| 42 | Pfeil |
| 43 | Pfeil |
| 44 | Stellung |
| 45 | Maschinentisch |
| 46 | Traggestell |
| 47 | Klischeewalze |
| 48 | Einfärbwalze |
| 49 | Verreibwalze |
| 50 | Pfeil |
| 51 | Tippwalze |
| 52 | Duktorwalze |
| 53 | Farbbehälter |
| 54 | Antrieb |
| 55 | Antriebsmotor |
| 56 | Traggestell |
| 57 | Massekörper |
| 58 | Schwingungsdämpfungselement |

59      Halterung
60      Handhabungsvorrichtung
61      Farbschicht
62      Farbschicht
63      Beschriftungssymbol
64      Arbeitspunkt
65      Achsabstand
66      Durchmesser

**Patentansprüche**

1. Verfahren zum Bearbeiten von Bauteilen (9) im Zuge einer vollautomatischen Montageanlage (1), auf der während einer stetigen Vorwärtsbewegung Bauteile (9) aus mehreren Einzelteilen zusammengesetzt bzw. gefügt werden, ein zu bearbeitender Bauteil (9) auf einem Werkstückträger (3) positioniert wird und dieser Werkstückträger (3) von schlupffrei angetriebenen Vorschubrollen (30) über eine Länge einer Bearbeitungsstation vorwärts bewegt wird dadurch gekennzeichnet, daß die Vorschubrollen (30) synchron mit der Druckwalze (29) angetrieben werden und die Länge um die der Werkstückträger (3) vorwärtsbewegt wird einer Länge eines aufzubringenden Druckes entspricht und danach mittels Laserstrahlen (14) zumindest eine Farbschichte (62) durch Hitzeeinwirkung entsprechend einem gewünschten Beschriftungsbild entfernt wird.

2. Verfahren nach Anspruch 1, dadurch gekennzeichnet, daß die zu bedruckende Fläche (26) und die den Vorschubrollen (30) zugewendete Reibfläche (27) am Werkstückträger (3) in einer Ebene angeordnet werden.

3. Verfahren nach Anspruch 1 oder 2, dadurch gekennzeichnet, daß die Transportgeschwindigkeit des Werkstückträgers (3) bzw. des Bauteiles (9) außerhalb des Bereiches der Vorschubrollen (30) kleiner ist als in jenem Bereich, in welchem die Vorschubrollen (30) sich am Werkstückträger (3) abwälzen.

4. Verfahren nach einem der Ansprüche 1 bis 3, dadurch gekennzeichnet, daß nach einem Aufbringen einer Farbschichte (61,62) auf einem Bauteil (9) die Drehrichtung der Vorschubrollen (30) und der Druckwalze (29) umgekehrt und der Werkstückträger (3) mit dem Bauteil (9) in entgegengesetzter Richtung nochmals unter der Druckwalze (29) hindurchbewegt und eine Farbschichte (61) aufgebracht wird, worauf am Ende nach dem Aufbringen der weiteren Farbschichte (61) die Drehrichtung der Vorschubrolle (30) und der Druckwalze (29) wieder in die ursprüngliche Drehrichtung entsprechend der Vorwärtsbewegung beim Aufbringen der ersten Farbschichte (61) verbracht wird und der Werkstückträger (3) mit dem Bauteil (9) unter der Druckwalze (29) zum Aufbringen einer nächsten Farbschichte (62) hindurchbewegt wird, wonach der Bauteil (9) getrocknet wird.

5. Verfahren nach einem der Ansprüche 1 bis 4, dadurch gekennzeichnet, daß der getrocknete Bauteil (9) durch eine weitere synchron mit einer weiteren Druckwalze (29) angetriebene Vorschubrolle (30) zumindest einmal über die Länge des aufzubringenden Druckes entlangbewegt wird, wobei mit der weiteren Druckwalze zumindest eine weitere Farbschichte (62) mit unterschiedlicher Farbe aufgebracht wird, wonach der Bauteil (9) getrocknet wird.

6. Verfahren nach einem der Ansprüche 1 bis 5, dadurch gekennzeichnet, daß zwischen dem Aufbringen zweier Farbschichten (61;62) die Druckwalze (29) zumindest zwei volle Umdrehungen in Anlage an der Einfärbwalze (48) vornimmt und daran anschließend die weitere Farbschichte aufgebracht wird, wobei vorzugsweise zum Einfärben der Druckwalze (29) diese aus ihrer dem Bauteil (9) zugewandten Druckstellung in eine Einfärbestellung verstellt wird.

7. Verfahren nach Anspruch 1, dadurch gekennzeichnet, daß die Frequenz der aufeinanderfolgenden Laserstrahlblitze und bzw. oder ein Achsabstand (65) zweier nebeneinanderliegender Arbeitspunkte (64) des Laserstrahles (14) zur Herstellung des Beschriftungsbildes kleiner als ein Durchmesser (66) und größer als eine Hälfte des Durchmessers (66) des Laserstrahles ist.

8. Verfahren nach einem der Ansprüche 1 bis 7, dadurch gekennzeichnet, daß mit einer großen Masse ein eigenes Schwingsystem gebildet wird und eine Lenkvorrichtung (13) für die Laserstrahlen (14) sowie der zu beschriftende Bauteil (9) mit diesem Schwingsystem bewegungsverbunden werden.

9. Vorrichtung zum Bearbeiten von Bauteilen (9) im Zuge einer vollautomatischen Montageanlage (1) mit entlang einer Führungsbahn (2) geführten Werkstückträgern (3), auf welchen Einzelteile der herzustellenden Bauteile (9) in einer vorbestimmten Position gehalten sind und mit einer Fördervorrichtung (4) zum Verfahren der Werkstückträger (3) entlang der Führungsbahn (2) sowie mit einer Bearbeitungsstation zum Bearbeiten der auf den Werkstückträgern (3) angeordneten Bauteile (9), die mit einer zu bearbeitenden Fläche (26) und einer Reibfläche (27) für Vorschubrollen (30) versehen sind zur Durchführung des Verfahrens nach einem der Ansprüche 1 bis 8, dadurch gekennzeichnet, daß eine Druckvorrichtung (17) zum Bedrucken der auf den Werkstückträgern (3) angeordneten Bauteile (9) angeordnet ist mit der die zu bearbeitende Fläche (26) zu bedrucken ist, welche gemeinsam mit einer Reibfläche (27) für Vorschubrollen (3O) in einer parallel zur Förderrichtung (24) sich erstreckenden Ebene angeordnet ist, und daß in einer einem Abstand zwischen dieser Ebene und der Förderbahn für den Werkstückträger entsprechenden Distanz von dieser Förderbahn in einer senkrecht zur Förderrichtung (24) verlaufenden Ebene eine Druckwalze (29) angeordnet ist, die über ein Verbindungsglied synchron mit den Vorschubrollen (30) angetrieben ist und daß die Druckwalze (29) und die Vorschubrollen (30) mit einem eine in Richtung des Werkstückträgers (22) gerichtete Kraft ausübenden Anpreßantrieb (33) wirkverbunden sind.

10. Vorrichtung nach Anspruch 9, dadurch gekennzeichnet, daß die Druckwalze (29) und Vorschubrolle (30) über einen gemeinsamen Antriebsmotor (39) angetrieben sind und daß eine Tippwalze (51) und die zwischen dieser und einem Farbbehälter (53) angeordneten Antriebsteile, wie z.B. die Duktorwalze (52), mit einem weiteren davon unabhängigen Antriebsmotor (55) gekuppelt sind.

11. Vorrichtung nach einem der Ansprüche 9 oder 10, dadurch gekennzeichnet, daß dem Werkstückträger (22) eine von den Vorschubrollen (30) unabhängige Fördervorrichtung (19,20) mit umschaltbarer Förderrichtung (24) zugeordnet ist, deren Förderbereich sich zumindest zwischen einer der Druckwalze (29) vorgeordneten Warteposition (23) bis in den Bereich einer der Druckwalze (29) in Förderrichtung nachgeordneten Trockenvorrichtung (25) erstreckt.

12. Vorrichtung nach einem der Ansprüche 9 bis 11, dadurch gekennzeichnet, daß die Vorschubrolle (30) und die Druckwalze (29) auf einem, um eine quer zur Förderrichtung (24) ausgerichtete Achse (36) gelagerten Schwenkarm (35) angeordnet ist und der Antriebsmotor (39) ebenfalls um eine parallel zu dieser Achse (36) ausgerichtete Schwenkachse verstellbar ist und mit einem Antriebsorgan (38) der Druckwalze (29) und Vorschubrollen (30) über ein Übertragungsglied, z.B. eine Kette oder einen Zahnriemen (37), antriebsverbunden ist.

13. Vorrichtung nach einem der Ansprüche 9 bis 12, dadurch gekennzeichnet, daß der die Vorschubrollen (30) und die Druckwalze (29) lagernde Schwenkarm (35) auch die zwischen der Druckwalze (29) und der Tippwalze (51) angeordneten Antriebsteile der Druckvorrichtung (17) lagert.

## Claims

1. Method for processing construction parts (9) in the course of a fully automatic assembly plant (1) in which construction parts (9) are assembled or connected together from a number of individual parts during a constant forward movement, a construction part (9) to be processed is positioned on a workpiece carrier (3) and this work piece carrier (3) is advanced by anti-slip operated feed rollers (30) through one length of a processing station, characterised in that the feed rollers (30) are driven in synchronism with the printing roller (29) and the length by which the workpiece carrier (3) is advanced corresponds to the length of a print to be applied and thereafter by means of laser beams (14) at least one pigment layer (62) is removed through the action of heat to expose the desired lettering.

2. Method according to claim 1, characterised in that the surface (26) to be printed on and the friction surface (27) facing the feed rollers (30) are arranged on one plane with the workpiece carrier (3).

3. Method according to claim 1 or 2, characterised in that the transport speed of the workpiece carrier (3) or the construction part (9) is less outside the region of the feed rollers (30) than in the region in which the feed rollers (30) roll off the workpiece carrier (3).

4. Method according to one of the claims 1 to 3, characterised in that after applying a pigment layer (61, 62) on a construction part (9) the direction of rotation of the feed rollers (30) and the printing roller (29) is reversed and the workpiece carrier (3) with the construction part (9) is passed once more beneath the printing roller (29) in the opposite direction and a pigment layer (61) is applied, whereupon after applying the further pigment layer (61) the direction of rotation of the feed roller (30) and the printing roller (29) is once again changed to the original direction of rotation corresponding to the forward movement which existed during the application of the first pigment layer (61), and the workpiece carrier (3) with the construction part (9) is passed beneath the printing roller (29) for applying the next pigment layer (62), after which the construction part (9) is dried.

5. Method according to one of the claims 1 to 4, characterised in that the dried construction part (9) is advanced by at least one length of the print to be applied by means of a further feed roller (30) driven in synchronism with a further printing roller (29), in which the further printing roller applies at least one further pigment layer (62) with a different colour, after which the construction part (9) is dried.

6. Method according to one of the claims 1 to 5, characterised in that in the interval between applying two pigment layers (61; 62) the printing roller (29) makes at least two complete revolutions in contact with the inking roller (48) and subsequent to this the further pigment layer is applied, in which for inking the printing roller (29) this is preferably moved from its printing position facing the construction part (9) into an inking position.

7. Method according to claim 1, characterised in that the frequency of the successive laser beam flashes and or an axial distance (65) of two adjacent work positions (64) of the laser beam (14) for producing the lettering is smaller than the diameter (66) and larger than half the diameter (66) of the laser beam.

8. Method according to one of the claims 1 to 7, characterised in that with a large mass a self-oscillating system is formed and linked to this oscillating system is a guide means (13) for the laser beams (14) and the construction part (9).

9. Device for processing construction parts (9) in the course of a fully automatic assembly plant (1) with a guide track (2) along which are guided workpiece carriers (3) on which individual parts of the construction parts (9) to be manufactured are held in a predetermined position and with a conveying device (4) for moving the workpiece carriers (3) along the guide track (2) as well as a processing station for processing the construction parts (9) arranged on the workpiece carriers (3), which construction parts (9) are provided with a surface (26) to be worked and a friction surface (27) for the feed rollers (30) for carrying out the method according to one of the claims 1 to 8, characterised in that for printing on the construction parts (9) arranged on the workpiece carriers (3) a printing device (17) is provided for printing on the processing surface (26) which together with a friction surface (27) for feed rollers (30) is arranged in a plane extending parallel to the conveying direction (24), and that at a distance corresponding to a distance between this plane and the conveying path for the workpiece carrier in a plane running perpendicular to the conveying direction (24) is arranged a printing roller (29) which through a connecting member is driven in synchronism with the feed rollers (30) and that the printing roller (29) and the feed rollers (30) are positively connected with a contact pressure drive (33) exerting a force in the direction towards the workpiece carrier (22).

10. Device according to claim 9, characterised in that the printing roller (29) and the feed roller (30) are driven by a common drive motor (39) and that an inching roller (51) and driven parts such as e.g. the doctor roller (52), arranged between this inching roller and an ink container (53), are separately connected to a further drive motor (55).

11. Device according to one of the claims 9 or 10, characterised in that the workpiece carrier (22) is associated with a conveying device (19, 20) independently of the feed rollers (30), with reversible conveying direction (24) whose conveying region extends at least between a waiting position (23) arranged in front of the printing roller (29) and the region of a drying device (25) arranged after the printing roller (29) in the conveying direction.

12. Device according to one of the claims 9 to 11, characterised in that the feed roller (30) and the printing roller (29) are arranged on a swivel arm (35) mounted on an axle (36) aligned transverse to the conveying direction (24) and the drive motor (39) can also be adjusted about a swivel axis aligned parallel to this axle (36) and through a transfer member, e.g. a chain or toothed belt (37), is connected with the drive member (38) of the printing roller (29) and the feed rollers (30).

13. Device according to one of the claims 9 to 12, characterised in that the swivel arm (35) supporting the feed rollers (30) and the printing roller (29) also supports the drive parts of the printing device (17) arranged between the printing roller (29) and the inching roller (51).

**Revendications**

1. Procédé de traitement d'éléments de construction (9) dans le cours d'une installation de montage entièrement automatique (1) sur laquelle, pendant un mouvement d'avancement continu, des éléments de construction (9) sont assemblés ou réunis à partir de plusieurs pièces composantes détachées, un élément de construction (9) à travailler est positionné sur un porte-outil (3) et ce porte-outil (3) est mû en avant par des galets d'avancement (30) entraînés sans glissement sur une certaine longueur d'une station de traitement, caractérisé en ce que les galets d'avancement (30) sont entraînés synchroniquement avec le rouleau imprimeur (29) et la longueur, dont le porte-outil (3) est déplacé en avant, correspond à une longueur d'une impression à apposer et, ensuite au moyen de rayons laser (14), au moins une couche de couleur (62) est éliminée par action de chaleur correspondant à une image d'inscription désirée.

2. Procédé selon la revendication 1, caractérisé en ce que la surface à imprimer (26) et la surface de friction (27) sur le porte-outil (3), tournée vers les galets d'avancement (30), sont disposées dans un plan.

3. Procédé selon la revendication 1 ou 2, caractérisé en ce que la vitesse de transport du porte-outil (3) ou de l'élément de construction (9) est plus petite, extérieurement à la région des galets d'avancement (30), que dans la zone dans laquelle les galets d'avancement (30) roulent sur le porte-outil (3).

4. Procédé selon l'une des revendications 1 à 3, caractérisé en ce qu'après une application d'une couche de couleur (61, 62) sur un élément de construction (9), le sens de rotation des galets d'avancement (30) et du cylindre d'impression (29) est inversé et le porte-outil (3) avec l'élément de construction (9) sont mus en sens opposé pour passer encore une fois sous le rouleau d'impression (29) et une couche de couleur (61) est appliquée, après quoi, à la fin après l'application de la couche de couleur supplémentaire (61), le sens de rotation du galet d'avancement (30) et du rouleau imprimeur (29) est rétabli dans le sens de rotation initial correspondant au mouvement d'avancement lors de l'application de la première couche de couleur (61) et le porte-outil (3) avec l'élément de construction (9) est mû pour passer sous le cylindre imprimeur (29) pour l'application de la couche de couleur suivante (62), après quoi l'élément de construction (9) est séché.

5. Procédé selon l'une des revendications 1 à 4, caractérisé en ce que l'élément de construction séché (9) est déplacé, par un autre galet d'avancement (30) entraîné synchroniquement avec un autre rouleau imprimeur (29), au moins une fois sur la longueur de l'impression à apposer le long de celle-ci, auquel cas, par l'autre cylindre d'impression, au moins une autre couche de couleur (62) à couleur différente est appliquée, après quoi l'élément de construction (9) est séché.

6. Procédé selon l'une des revendicatiaons 1 à 5, caractérisé en ce qu'entre l'application de deux couches de couleur (61;62), le rouleau imprimeur (29) entreprend au moins deux rotations complètes en application contre le cylindre d'encrage (48) et, subséquemment à cela, l'autre couche de couleur est appliquée, auquel cas de préférence pour l'encrage du rouleau d'impression (29), celui-ci est déplacé de sa position d'impression, tournée vers l'élément de construction (9) dans une position d'encrage.

7. Procédé selon la revendication 1, caractérisé en ce que la fréquence des éclairs successifs de rayon laser et/ou une distance d'entraxe (65) de deux points (64) du rayon laser (14), placés l'un à côté de l'autre, pour la réalisation de l'image d'inscription, est plus petite qu'un diamètre (66) et plus grande qu'une moitié du diamètre (66) du rayon laser.

8. Procédé selon l'une des revendications 1 à 7, caractérisé en ce qu un système oscillant propre est formé avec une grande masse et un dispositif directeur (13) pour les rayons laser (14) ainsi que l'élément d'inscription (9) à marquer sont liés en mouvement à ce système oscillant.

9. Dispositif pour le traitement d'éléments de construction (9) dans le cours d'une installation de montage entièrement automatique (1), avec des porte-outil (3) conduits le long d'une voie de guidage (2) et sur lesquels des pièces composantes détachées des éléments de construction (9) à réaliser sont maintenues dans une position prédéterminée et avec un dispositif transporteur (4) pour le déplacement des porte-outil (3) le long du chemin de guidage (2) ainsi qu'avec une station de traitement pour le traitement des éléments de construction (9) disposés sur les porte-outil (3) et qui sont pourvus d'une surface à travailler (26) et d'une surface de friction (27) pour des galets d'avancement (30) pour l'exécution du procédé selon l'une des revendications 1 à 8, caractérisé en ce qu'est monté un dispositif d'impression (17) pour l'impression des éléments de construction (9) disposés sur les porteoutil (3), par lequel la surface à travailler (26) est à imprimer, laquelle, conjointement avec une surface de friction (27) pour des galets d'avancement (30), est disposée dans un plan s'étendant parallèlement à la direction de transport (24) et en ce qu'à une distance de la voie de transport pour le porte-outil, correspondant à un espacement entre ce plan et cette voie de transport et dans un plan s'étendant perpendiculairement à la direction de transport (24) est disposé un cylindre d'impression (29) qui est entraîné par l'intermédiaire d'un organe de liaison synchroniquement avec les galets d'avancement (30) et en ce que le cylindre imprimeur (29) et les galets d'avancement (30) sont liés dans leur action à une commande de pression d'appui (33) exerçant une force dirigée en direction du porte-outil (22).

10. Dispositif selon la revendication 9, caractérisé en ce que le cylindre d'impression (29) et le galet d'avancement (30) sont entraînés par l'intermédiaire d'un moteur d'entraînement commun (39) et en ce qu'un rouleau de contact (51) et les éléments d'entraînement, tels que par exemple le cylindre encreur (52), disposés entre le rouleau de contact et un réservoir de couleur (53), sont accouplés à un autre moteur d'entraînement (55) indépendant de ceux-ci.

11. Dispositif selon l'une des revendications 9 ou 10, caractérisé en ce qu au porte-outil (22) est associé un dispositif transporteur (19, 20) à sens de transport réversible, indépendant des galets d'avancement (30) dont la zone de transport s'étend au moins entre une position d'attente (23) précédant le cylindre d'impression (29) jusqu'au voisinage d'un dispositif de séchage (25) placé après le cylindre d'impression (29) dans le sens de transport.

12. Dispositif selon l'une des revendications 9 à 11, caractérisé en ce que le galet d'avancement (30) et le cylindre d'impression (29) sont disposés sur un bras pivotant (35) monté de façon à pouvoir pivoter autour d'un axe (36) orienté transversalement à la direction de transport (24) et le moteur d'entraînement (39) est également déplaçable autour d'un axe de pivotement orienté parallèlement à cet axe (36) et est lié en entraînement à un organe d'entraînement (38) du cylindre d'impression (29) et des galets d'avancement (30), par l'intermédiaire d'un organe de transmission, par exemple d'une chaîne ou d'une courroie crantée (37).

13. Dispositif selon l'une des revendications 9 à 12, caractérisé en ce que le bras pivotant (35), portant les galets d'avancement (30) et le cylindre d'impression (29), supporte aussi les éléments d'entraînement du dispositif d'impression (17) disposés entre le cylindre d'impression (29) et le rouleau de contact (51).

Fig.1

**Fig.2**

EP 0 215 389 B1

Fig.3

**Fig.4**

**Fig.5**

**Fig.6**